# EUROPÄISCHE PATENTSCHRIFT

(11) **EP 1 563 936 B1**
(45) Veröffentlichungstag und Bekanntmachung des Hinweises auf die Patenterteilung: **22.04.2009**
(21) Anmeldenummer: 05100887.8
(22) Anmeldetag: 09.02.2005
(51) Int. Cl.: B23D 59/00, B23Q 11/00

(54) **Absaugvorrichtung**
Suction device
Dispositif d'aspiration

(30) Priorität: 12.02.2004 DE 102004006888
(43) Veröffentlichungstag der Anmeldung: 17.08.2005
(73) Patentinhaber: HILTI Aktiengesellschaft, 9494 Schaan (LI)
(72) Erfinder: Thanner, Thomas, 81245 München (DE); Daam, Norbert, 86944 Oberdiessen (DE)
(74) Vertreter: Wildi, Roland

(56) Entgegenhaltungen:
- DE-A1- 4 024 022
- DE-A1- 10 153 939
- DE-A1- 19 812 040
- DE-B- 1 299 955
- GB-A- 1 243 234
- US-A- 3 134 246
- US-A- 3 186 190

## Beschreibung

Die Erfindung betrifft eine Absaugvorrichtung eines handgeführten Handwerkzeuggerätes gemäß dem Oberbegriff des Anspruchs 1, insbesondere einer Stichsäge, die vom Handwerkzeuggerät lösbar ist und die ein Sauggebläserad, zur Erzeugung eines Saugluftstromes in einem Saugpfad, aufweist, das von einer Gebläsewelle antreibbar ist, wobei die Gebläsewelle über eine Mitnahmekupplung mit einer motorisch angetriebenen Antriebswelle des Handwerkzeuggerätes rotatorisch koppelbar ist und über ein Wälzlager in einem Saugergehäuse gehalten ist. Eine solche Absaugvorrichtung ist der DE 40 24 022 zu entnehmen.

Derartige Absaugvorrichtungen können bei Bedarf an dem jeweiligen Handwerkzeuggerät angebracht werden, um die bei einer Bearbeitung eines Werkstückes entstehenden Abriebselemente, wie beispielsweise Sägespäne, Bohrklein oder Stäube, abzusaugen und zu sammein. Durch die rotatorische Kupplung der Gebläsewelle mit der Antriebswelle des Handwerkzeuggetriebes benötigt die Absaugvorrichtung dabei keinen eigenen Antrieb, so dass die Absaugvorrichtung mit relativ wenig Bauraum und geringem Gewicht hergestellt werden kann.

Aus der DE 40 24 022 ist eine Absaugvorrichtung für ein Bohr- oder Meisselgerät bekannt, bei der die Mitnahmekupplung durch eine schlitzförmige Ausnehmung der Antriebswelle gebildet ist, in die eine klingenförmige Erhöhung der Gebläsewelle eingreift. Zudem ist die Gebläsewelle axial verschiebbar in dem Saugergehäuse gelagert und wird im angebrachten Zustand durch eine Feder in den Eingriff mit der Antriebswelle gedrückt.

Durch diese bekannte Vorgehensweise wird ein sicherer Antrieb des Sauggebläserades mit hohem Wirkungsgrad erzielt.

DE 101 53 939 A1 zeigt eine Handwerkzeugmaschine, die lösbar mit einer Absaugeinrichtung verbunden ist. Hierfür ist eine Kupplung vorgesehen, die an einer Antriebswelle der Handwerkzeugmaschine Nockenteile aufweist, die im gekoppelten Zustand der Kupplung in entsprechend angeordnete Längsschlitze einer Tragwelle der Absaugeinrichtung greifen.

DE 198 12 040 A1 beschreibt eine Schneidemaschine mit Verbrennungsmotor, an der ein Zentrifugalgebläse zum Absaugen von Stäuben vorgesehen ist. Das Zentrifugalgebläse ist dabei über einen Endlosband-Transmissionsmechanismus drehangetrieben.

Bei einigen Handwerkzeuggeräten hat man jedoch das Problem, dass beim Anbringen der Absaugvorrichtung an dem Handwerkzeuggerät gewisse Masstoleranzen bezüglich den axialen Abständen zwischen beiden Elementen sowie der Koaxialität beider Wellen vorhanden sind, die sich bei jeder Anbringung der Absaugvorrichtung ändern können.

Die Gefahr eines Neigungswinkels zwischen den beiden Wellen ist dabei besonders bei Handwerkzeuggeräten, wie beispielsweise Stichsägen gegeben, bei denen die Wellen im normalen Betrieb senkrecht zur Schwerkraft angeordnet sind. Hierbei kann sich allein durch die Wirkung der Schwerkraft auf die Absaugvorrichtung eine gewisse Neigung und eine axiale Verschiebung zwischen Handwerkzeuggerät und Absaugvorrichtung einstellen. Diese Axialmass- und Winkelabweichungen erzeugen im Betrieb Zwangskräfte, die zu einem höheren Verschleiss führen.

Ferner wird die Anordnung aus Gebläsewelle und Sauggebläserad insbesondere beim Einschalten des Motors besonders stark belastet, da der Antrieb des Handwerkzeuggerätes in der Regel nicht auf ein optimiertes Anfahren des Sauggebläserades eingestellt ist. Auch hierdurch wird der Verschleiss der Absaugvorrichtung erhöht, was insgesamt zu einer kürzeren Lebensdauer der Absaugvorrichtung führt.

Der vorliegenden Erfindung liegt die Aufgabe zugrunde, bei einer an einem Handwerkzeuggerät bedarfsweise anbringbaren Absaugvorrichtung die genannten Nachteile zu vermeiden und eine längere Lebensdauer zu ermöglichen.

Erfindungsgemäss wird die Aufgabe durch die Merkmale des Kennzeichnenden Teils des Anspruchs I gelöst.

Hierdurch kann bei Überschreitung eines maximalen Drehmomentes zwischen beiden Wellen ein Schlupf auftreten, durch den eine Überlastung der Anordnung aus Gebläsewelle und Sauggebläserad vermieden wird. Zudem können bei einer lediglich reibschlüssigen Drehmomentübertragung auch grössere Masstoleranzen zwischen dem Handwerkzeuggerät und der angebrachten Absaugvorrichtung kompensiert werden, so dass hieraus keine Zwangskräfte an der Absaugvorrichtung entstehen. Insgesamt kann somit die Lebenszeit der Absaugvorrichtung verlängert werden.

Durch das elastische Reibelement lässt sich das maximale Drehmoment, das durch die Mitnahmekupplung übertragen werden kann, auf einfache Weise einstellen.

In einer besonders bevorzugten Ausführungsform ist das elastische Reibelement durch eine auf der Gebläsewelle gehaltene Gummihülse gebildet, die einen zylindrischen Aufnahmeraum umschliesst, dessen Durchmesser geringfügig kleiner ist, als der Aussendurchmesser der Antriebswelle. Hierdurch wird die Gummihülse beim Anbringen der Absaugvorrichtung an dem Handwerkzeuggerät durch den etwas grösseren Aussendurchmesser der Antriebswelle gedehnt und drückt anschliessend mit einer zylindrischen Innenfläche gegen diese. Auf diese Weise wird ein sicherer und gleichmässig über den Umfang der Antriebswelle verteilter Reibschluss hergestellt, über den ein für den Betrieb der Absaugvorrichtung ausreichend grosses Drehmoment von der Antriebswelle auf die Gebläsewelle übertragbar ist.

Vorteilhafterweise weist die Gummihülse mit der Gebläsewelle einen in Rotationsrichtung wirkenden Formschluss auf, wodurch ein guter Halt und eine besonders drehfeste Verbindung zwischen der Gebläsewelle und der als absaugvorrichtungsseitiges Kupplungsteil wirkenden Gummihülse erzielt wird.

Bevorzugterweise ist auf die Gummihülse eine starre Aussenhülse aufgeschoben. Diese kann beispielsweise durch eine Metallhülse gebildet sein, die bei den vorsehbaren Betriebsbedingungen keine merkbare Elastizität oder Verformbarkeit aufweist. Auf diese Weise wird einerseits ein besonders sicherer Halt der Gummihülse an der Gebläsewelle erzielt. Andererseits können die Antriebswelle und die Gebläsewelle über die starre Aussenhülse besonders exakt koaxial zueinander ausgerichtet werden.

Vorteilhafterweise ist zwischen Wälzlager und Saugergehäuse ein Kippspiel um eine senkrecht zu einer Gebläsewellenachse stehenden Kippachse vorgesehen. Auf diese Weise können durch leichtes Verkippen des Wälzlagers gegenüber dem Saugergehäuse Zwangskräfte verhindert werden, die beispielsweise in Folge der starren Verbindung beider Wellen über die Aussenhülse bei gleichzeitig vorhandenen Winkelabweichungen zwischen Handwerkzeuggerät und Gebläsewelle entstehen würden.

Dabei ist es günstig, wenn das Wälzlager unter Zwischenlage eines elastischen Lagerelementes im Gehäuse gehalten ist. Hierdurch kann das Kippspiel durch besonders einfache und kostengünstige Massnahmen hergestellt werden.

Vorteilhafterweise ist das elastische Lagerelement durch einen O-Ring gebildet, wodurch in einfacher Weise ein radiales Spiel des Wälzlagers herstellbar ist, was die Herstellungskosten weiter reduziert. Zudem wird dadurch ein Verdrehen eines Lageraussenringes gegenüber dem Saugergehäuse verhindert.

Dabei ist es günstig, wenn das Wälzlager in achsialer Richtung zwischen einem am Saugergehäuse gehaltenen Sprengring und einem zwischen Saugergehäuse und Wälzlager eingeklemmten Wellring angeordnet ist. Hierdurch lässt sich in einfacher Weise ein vorbestimmter Widerstand gegen eine Kippbewegung des Wälzlagers einstellen.

Die Erfindung wird nachstehend anhand eines Ausführungsbeispieles näher erläutert. Es zeigen:
- Fig. 1: einen Längsschnitt einer erfindungsgemässen Absaugvorrichtung,
- Fig. 2: einen Detailschnitt durch ein Wälzlager der Absaugvorrichtung,
- Fig. 3: einen Detailschnitt durch eine Mitnahmekupplung,
- Fig. 4: einen Querschnitt durch die Mitnahmekupplung nach Fig. 3 auf der Höhe eines zylindrischen Aufnahmeraumes einer Gummihülse und
- Fig. 5: einen Querschnitt durch die Mitnahmekupplung nach Fig. 3 auf der Höhe einer formschlüssigen Verbindung zwischen der Gummihülse und einer Gebläsewelle.

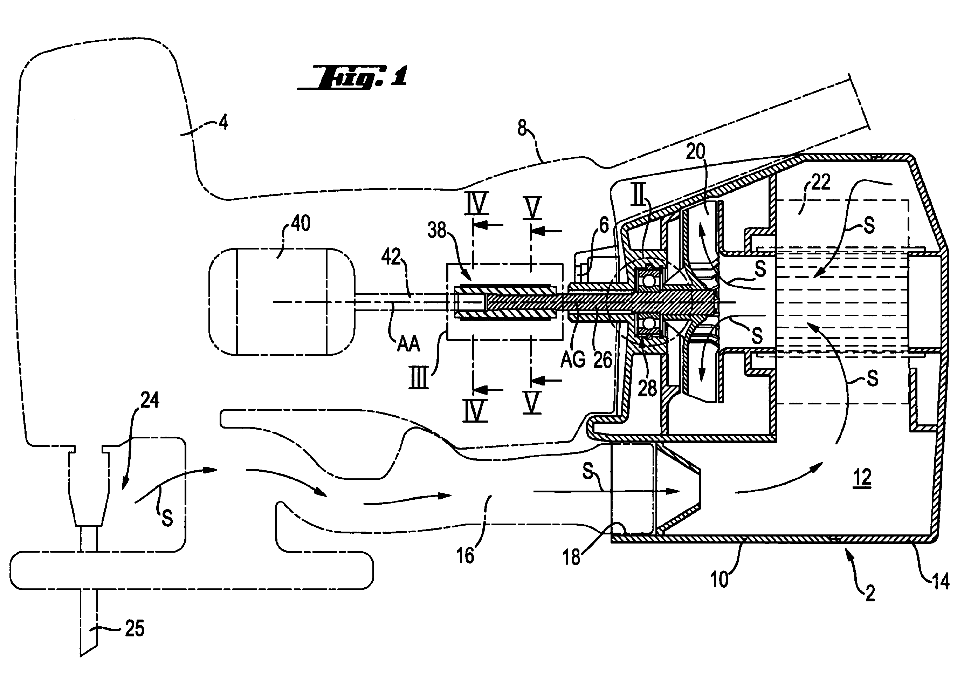

Fig. 1 zeigt eine Absaugvorrichtung 2, die an einem strichpunktiert dargestellten Handwerkzeuggerät 4, in beispielhafter Form einer Stichsäge anbringbar ist. Hierzu weist die Absaugvorrichtung 2 flexible Rasthaken 6 auf, die lösbar in nicht dargestellte Rastaufnahmen an einem Gerätegehäuse 8 des Handwerkzeuggerätes 4 einrastbar sind.

Die Absaugvorrichtung 2 weist ein Saugergehäuse 10 auf, das einen Sammelraum 12 umschliesst, der zur Aufnahme von Sägespänen und Stäuben dient. Im Bereich des Sammelraumes 12 weist das Saugergehäuse 10 einen Deckel 14 auf, der zum Entleeren des Sammelraumes 12 vom übrigen Saugergehäuse 10 abnehmbar ist.

Der Sammelraum 12 ist in einem durch Pfeile S dargestellten Saugpfad angeordnet, der von einem Absaugrohr 16 des Handwerkzeuggerätes 4, das in eine Rohraufnahme 18 des Saugergehäuses 10 einsteckbar ist, zu einem Sauggebläserad 20 führt, das in dem Saugergehäuse gelagert ist. Dabei ist zwischen dem Sammelraum 12 und dem Sauggebläserad 20 ein gestrichelt dargestelltes Filterelement 22 angeordnet, das in dem Saugergehäuse 10 auswechselbar gehalten ist.

Das Sauggebläserad 20 dient zur Erzeugung eines Saugluftstromes entlang des Saugpfades S, mit dem Sägespäne und Stäube, die im Betrieb des Handwerkzeuggerätes 2 anfallen, aus einem Arbeitsraum 24 an einem Schnittwerkzeug 25 über das Absaugrohr 16 in den Sammelraum 12 transportiert werden. Hier werden sie durch das Filterelement 22 von der Reinluft des Saugluftstromes getrennt, die durch das Filterelement 22 hindurch zum Sauggebläserad 20 und von diesem über nicht dargestellte Schlitze im Saugergehäuse 10 aus diesem heraus strömt.

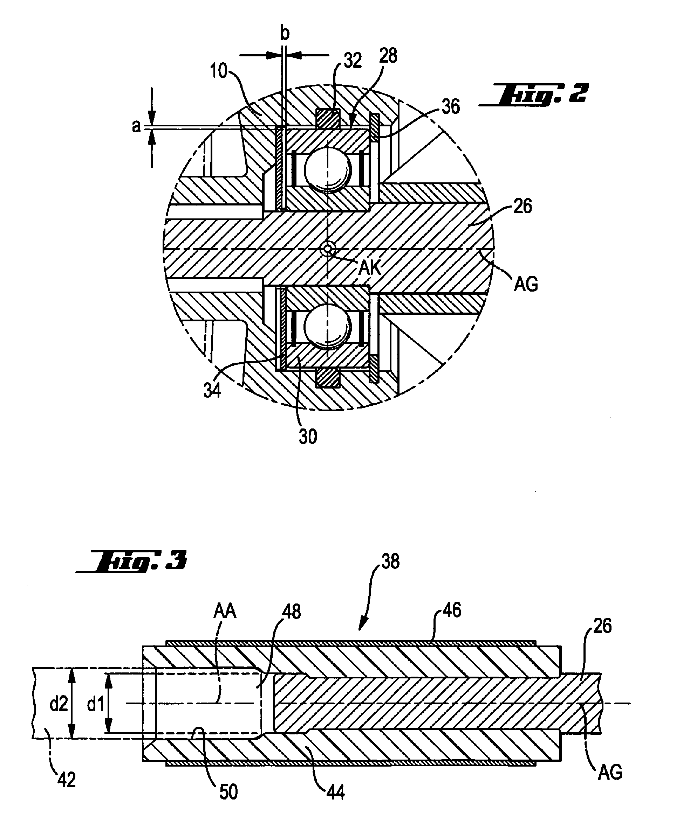

Das Sauggebläserad 20 sitzt drehfest auf einer Gebläsewelle 26. Diese ist über ein auf ihr aufgepresstes Wälzlager 28 in Form eines Kugellagers, das in Fig. 2 vergrössert dargestellt ist, drehbar im Saugergehäuse 10 gelagert. Hierbei stützt sich ein Lageraussenring 30 in radialer Richtung unter Zwischenlage eines flexiblen O-Ringes 32 am Saugergehäuse 10 ab. Auf diese Weise entsteht zwischen dem Wälzlager 28 und dem Saugergehäuse 10 ein Radialspiel a von ca. 0,2 mm.

Parallel zu einer Gebläsewellenachse AG der Gebläsewelle 26 drückt ein Wellring 34 gegen das Wälzlager 28, der sich am Saugergehäuse 10 abstützt. Auf der von dem Wellring 34 abgewandten Seite liegt der Lageraussenring 30 in axialer Richtung an einem mit dem Saugergehäuse 10 in Eingriff stehenden Sprengring 36 an. Gegen die Federkraft des Wellringes weist das Wälzlager 28 ein Axialspiel b von ebenfalls ca. 0,2 mm auf.

Durch die beiden Spiele a, b kann das Wälzlager 28 gegenüber dem Saugergehäuse 10 eine leichte Kippbewegung um eine senkrecht zur Gebläsewellenachse AG stehende Kippachse AK ausführen.

Zum Antrieb der Gebläsewelle 26 ist diese, wie aus Fig. 1 zu entnehmen ist, über eine insgesamt mit 38 bezeichnete Mitnahmekupplung 38 mit einer durch einen Motor 40 angetriebenen Antriebswelle 42 rotatorisch gekoppelt.

Wie insbesondere aus Fig. 3 zu entnehmen ist, weist die Mitnahmekupplung 38 eine auf die Gebläsewelle 26 aufgesteckte Gummihülse 44 auf. Um diese Gummihülse 44 in axialer Richtung fest auf an Gebläsewelle 26 zu sichern, ist auf die Gummihülse 44 zudem eine starre Aussenhülse 46 aus Metall aufgezogen, die für ein Anpressen der Gummihülse 44 gegen die Aussenseite der Gebläsewelle 26 sorgt.

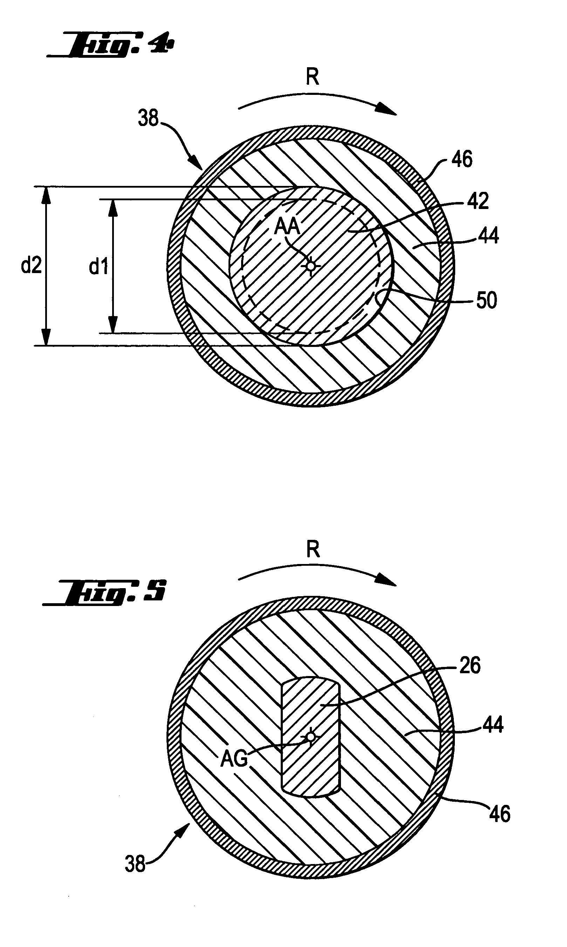

An einem antriebswellenseitigen Ende bildet die Gummihülse 44, wie aus Fig. 3 und 4 zu entnehmen ist, einen zylindrischen Aufnahmeraum 48 aus, in den die Antriebswelle 42 einsteckbar ist. Der Aufnahmeraum weist im unbelasteten Zustand der Gummihülse 44, wie gestrichelt dargestellt, einen Durchmesser d1 auf, der geringfügig kleiner als ein Aussendurchmesser d2 der Antriebswelle 42 ist.

Hierdurch wird die Gummihülse 44 beim Anbringen der Absaugvorrichtung 2 an dem Handwerkzeuggerät 4 und dem gleichzeitigen Einstecken der Antriebswelle 42 in den Aufnahmeraum 48 verformt und drückt im Anschluss daran mit einer den Aufnahmeraum 48 begrenzenden Innenfläche 50 gegen die Antriebswelle 42.

Alternativ hierzu ist es auch möglich, dass die Gummihülse in gleicher Weise an der Antriebswelle 42 befestigt ist und bei der Anbringung der Absaugvorrichtung 2 mit der Gebläsewelle 26 verbunden wird.

Auf diese Weise wird zwischen der als erstes Kupplungsteil wirkenden Gummihülse 44 und dem als zweites Kupplungsteil wirkenden, vom Motor 40 abgewandten Ende der Antriebswelle 42 ein Reibschluss in einer Rotationsrichtung R erzeugt.

Der Reibschluss ist dabei ausreichend, um durch Rotation der Antriebswelle 42 um eine Antriebsachse AA auch die Gebläsewelle 26 und mit ihr das Sauggebläserad 20 anzutreiben und dabei einen ausreichenden Saugluftstrom entlang des Saugpfades S zu erzeugen.

Andererseits gewährleistet die rein durch Reibschluss erfolgende Übertragung des Drehmomentes, dass bei Überschreitung eines maximalen Drehmomentes, das beispielsweise bei schnellem Hochfahren des Motors 40 aus einer Ruhestellung auftreten kann, ein Schlupf zwischen Antriebswelle 42 und Gebläsewelle 26 auftritt. Hierdurch können Beschädigungen an der Anordnung aus Gebläsewelle 26 und Sauggebläserad 20 vermieden werden.

Um zwischen der Gebläsewelle 26 und der Gummihülse 44 eine sichere Drehmomentübertragung sicherzustellen, weist die Gebläsewelle 26 in dem Bereich, auf den die Gummihülse 44 aufgesteckt ist einen von einer Kreisform abweichenden Schlüsselquerschnitt auf, der in eine entsprechend geformte Schlüsselausnehmung der Gummihülse 44 eingesteckt ist, wie aus Fig. 5 zu entnehmen ist. Somit weist die Gummihülse 44 mit der Gebläsewelle 26 in diesem Bereich einen in Rotationsrichtung R wirkenden Formschluss auf.

Die auf die Gummihülse 44 aufgezogene starre Aussenhülse 46 sorgt zudem für eine koaxiale Ausrichtung der Gebläsewellenachse AG und der Antriebsachse AA. Im Falle, dass die Absaugvorrichtung 2 mit einer gewissen Neigung gegenüber einer idealen Positionierung gegenüber dem Handwerkzeuggerät 4 an diesem angebracht wird, wird die Abweichung durch ein leichtes Kippen des Wälzlagers 28 gegenüber dem Saugergehäuse 10 ausgeglichen. Auf diese Weise werden auf die Absaugvorrichtung wirkende Zwangskräfte infolge der steifen Verbindung der beiden Wellen 26, 42 vermieden.

## Patentansprüche

1. Absaugvorrichtung (2) eines handgeführten Handwerkzeuggerätes (4),
die vom Handwerkzeuggerät (4) lösbar ist und
die ein Saugergehäuse (10), ein Wälzlager (28), eine Gebläsewelle (26) und ein erstes Kupplungsteil einer Mitnahmekupplung (38) aufweist und
die ein Sauggebläserad (20), zur Erzeugung eines Saugluftstromes in einem Saugpfad (S), aufweist, das von der Gebläsewelle (26) antreibbar ist,
wobei die Gebläsewelle (26) über die Mitnahmekupplung (38) mit einer Antriebswelle (42) des Handwerkzeuggerätes (4) rotatorisch koppelbar ist und über das Wälzlager (28) im Saugergehäuse (10) gehalten ist,
**dadurch gekennzeichnet,**
**dass** die Mitnahmekupplung (38) im gekoppelten Zustand zwischen der Gebläsewelle (26) und der Antriebswelle (42) einen Reibschluss zur Rotationsübertragung aufweist,
wobei das erste Kupplungsteil der Mitnahmekupplung (38) ein elastischer Reibelement aufweist, wobei das Reibelement zur Erzeugung des Reibschlusses im gekoppelten Zustand gegen ein zweites Kupplungsteil der Mitnahmekupplung (38) drückt.

2. Absaugvorrichtung nach Anspruch 1, **dadurch gekennzeichnet, dass** das elastische Reibelement durch eine auf der Gebläsewelle (26) gehaltene Gummihülse (44) gebildet ist, die einen zylindrischen Aufnahmeraum (48) umschliesst, dessen Durchmesser (d1) geringfügig kleiner ist, als der Aussendurchmesser (d2) der Antriebswelle (42).

3. Absaugvorrichtung nach Anspruch 2, **dadurch gekennzeichnet, dass** die Gummihülse (44) mit der Gebläsewelle (26) einen in Rotationsrichtung (R) wirkenden Formschluss aufweist.

4. Absaugvorrichtung nach Anspruch 2 oder 3, **dadurch gekennzeichnet, dass** auf die Gummihülse (44) eine starre Aussenhülse (46) aufgeschoben ist.

5. Absaugvorrichtung nach einem der Ansprüche 1 bis 4, **dadurch gekennzeichnet, dass** zwischen Wälzlager (28) und Saugergehäuse (10) ein Kippspiel um eine senkrecht zu einer Gebläsewellenachse (AG) stehenden Kippachse (AK) vorgesehen ist.

6. Absaugvorrichtung nach einem der Ansprüche 1 bis 5, **dadurch gekennzeichnet, dass** das Wälzlager (28) unter Zwischenlage eines elastischen Lagerelementes im Saugergehäuse (10) gehalten ist.

7. Absaugvorrichtung nach Anspruch 6, **dadurch gekennzeichnet, dass** das elastische Lagerelement durch einen O-Ring (32) gebildet ist.

8. Absaugvorrichtung nach einem der Ansprüche 1 bis 7, **dadurch gekennzeichnet, dass** das Wälzlager (28) in achsialer Richtung zwischen einem am Saugergehäuse (10) gehaltenen Sprengring (36) und einem zwischen Saugergehäuse (10) und Wälzlager (28) eingeklemmten Wellring (34) angeordnet ist.

## Claims

1. Suction device (2) for a hand-held power tool (4), which suction device (4) can be detached from the power tool (4), has a suction-device housing (10), a rolling-element bearing (28), an impeller shaft (26) and a first coupling part of an entraining coupling (38), and has a suction impeller (20) for producing a flow of inducted air along a suction path (S), which suction impeller (20) can be driven by the impeller shaft (26), the impeller shaft (26) being able to be coupled in rotation to a drive shaft (42) of the power tool (4) by means of the entraining coupling (38) and being held in place in the suction-device housing (10) by means of the rolling-element bearing (28), **characterised in that**, in the state where there is coupling between the impeller shaft (26) and the drive shaft (42), the entraining coupling (38) is in frictional engagement for the purpose of transmitting rotation, the first part of the entraining coupling (38) having an elastic frictional element, the frictional element pressing against a second part of the entraining coupling (38) in the coupled state to produce the frictional engagement.

2. Suction device according to claim 1, **characterised in that** the elastic frictional element is formed by a rubber sleeve (44) which is held in place on the impeller shaft (26) and which encloses a cylindrical receiving space (48) whose diameter (d1) is slightly smaller than the outside diameter (d2) of the drive shaft (42).

3. Suction device according to claim 2, **characterised in that** the rubber sleeve (44) has, with the impeller shaft (26), a positive interengagement which operates in the direction of rotation (R).

4. Suction device according to claim 2 or 3, **characterised in that** a rigid outer sleeve (46) is slid onto the rubber sleeve (44).

5. Suction device according to one of claims 1 to 4, **characterised in that** clearance for tilting about an axis of tilt (AK) which lies perpendicular to the axis (AG) of the impeller shaft is provided between the rolling-element bearing (28) and the suction-device housing (10).

6. Suction device according to one of claims 1 to 5, **characterised in that** the rolling-element bearing (28) is held in place in the suction-device housing (10) by interposing an elastic mounting member.

7. Suction device according to claim 6, **characterised in that** the elastic mounting member is formed by an O-ring (32).

8. Suction device according to one of claims 1 to 7, **characterised in that**, in the axial direction, the rolling-element bearing (28) is arranged between a circlip (36) which is held in the suction-device housing (10) and a crinkle washer (34) which is clamped in place between the suction-device housing (10) and the rolling-element bearing (28).

## Revendications

1. Dispositif d'aspiration (2) d'un appareil portatif à main (4), ledit dispositif étant détachable de l'appareil portatif (4), comprenant un carter d'aspirateur (10), un palier à roulement (28), un arbre de ventilateur (26) et une première partie d'accouplement d'un accouplement d'entraînement (38), et comprenant une roue de ventilateur d'aspiration (20) destinée à produire un courant d'air aspiré sur un trajet d'aspiration (S) et entraînée par l'arbre de ventilateur (26), l'arbre de ventilateur (26) étant accouplé à rotation à un arbre d'entraînement (42) par l'intermédiaire de l'accouplement d'entraînement (38) et étant maintenu dans le carter d'aspirateur (10) par l'intermédiaire du palier à roulement (28), **caractérisé en ce qu'**à l'état accouplé l'accouplement d'entraînement (38) crée, entre l'arbre de ventilateur (26) et l'arbre d'entraînement (42), une liaison par friction pour l'entraînement en rotation, la première partie d'accouplement de l'accouplement d'entraînement (38) comportant un premier élément de friction élastique, l'élément de friction exerçant une pression sur une seconde partie d'accouplement de l'accouplement d'entraînement (38) pour créer la liaison par friction à l'état accouplé.

2. Dispositif d'aspiration selon la revendication 1, **caractérisé en ce que** l'élément de friction élastique est formé par un manchon en caoutchouc (44) qui est maintenu sur l'arbre de ventilateur (26) et qui entoure un espace de réception cylindrique (48) dont le diamètre (d1) est légèrement inférieur au diamètre extérieur (d2) de l'arbre d'entraînement (42).

3. Dispositif d'aspiration selon la revendication 2, **caractérisé en ce que** le manchon en caoutchouc (44) crée avec l'arbre de ventilateur (26) une liaison par complémentarité de formes agissant dans la direction de rotation (R).

4. Dispositif d'aspiration selon la revendication 2 ou 3, **caractérisé en ce que** sur le manchon en caoutchouc (44) est emmanché un manchon extérieur rigide (46).

5. Dispositif d'aspiration selon une des revendications 1 à 4, **caractérisé en ce qu'**entre le palier à roulement (28) et le carter d'aspirateur (10) est ménagé un jeu de basculement autour d'un axe de basculement (AK) perpendiculaire à un axe d'arbre de ventilateur (AG).

6. Dispositif d'aspiration selon une des revendications 1 à 5, **caractérisé en ce que** le palier à roulement (28) est maintenu dans le carter d'aspirateur (10) avec interposition d'un élément d'appui élastique.

7. Dispositif d'aspiration selon la revendication 6, **caractérisé en ce que** l'élément d'appui élastique est formé par un joint torique (32).

8. Dispositif d'aspiration selon une des revendications 1 à 7, **caractérisé en ce que**, dans la direction axiale, le palier à roulement (28) est disposé entre un anneau expansible (36), maintenu contre le carter d'aspirateur (10), et un anneau ondulé (34) inséré entre le carter d'aspirateur (10) et le palier à roulement (28).
